# EUROPEAN PATENT APPLICATION

(11) **EP 3 185 643 A1**
(43) Date of publication of application: **28.06.2017**
(21) Application number: 14901919.2
(22) Date of filing: 15.09.2014
(51) Int. Cl.: H04W 84/00

(54) **ENHANCED MULTIMEDIA BROADCAST/MULTICAST SERVICE PROCESSING NETWORK ELEMENT, AND BROADCAST METHOD THEREFOR**

(71) Applicant: Huawei Technologies Co. Ltd., Shenzhen, Guangdong 518129 (CN)
(72) Inventor: WU, Wenfu, Shenzhen Guangdong 518129 (CN); SHEN, Wenxue, Shenzhen Guangdong 518129 (CN); ZHAO, Qiyong, Shenzhen Guangdong 518129 (CN)
(74) Representative: Pfenning, Meinig & Partner mbB
(86) International application number: PCT/CN2014/086563
(87) International publication number: WO 2016/041135

(57) **Abstract**

The present invention discloses an evolved multimedia broadcast/multicast service (eMBMS) processing network element and an evolved multimedia broadcast/multicast service broadcast method. The eMBMS processing network element includes a first transceiver and a first processor. The first transceiver receives an eMBMS bearer application request from an application server. The eMBMS bearer application request includes a broadcast area. The first transceiver sends the broadcast area to a configuration service center, and receives broadcast/multicast service area (MBMS SA) configuration information returned by the configuration service center according to the broadcast area. The first processor establishes an eMBMS session resource of the broadcast area according to the MBMS SA configuration information. In the foregoing manner, the present invention can resolve a problem that a broadcast area cannot be dynamically generated under an eMBMS broadcast mechanism.

## Description

### TECHNICAL FIELD

The present invention relates to the field of communications technologies, and in particular, to an evolved multimedia broadcast/multicast service processing network element and an evolved multimedia broadcast/multicast service broadcast method.

### BACKGROUND

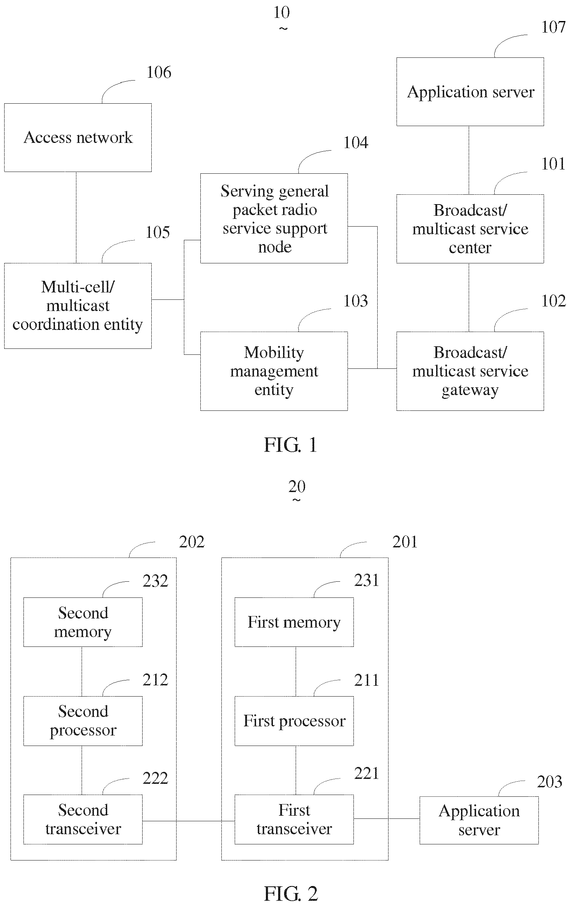

As shown in FIG. 1, an evolved multimedia broadcast/multicast service (Evolved Multimedia Broadcast/Multicast Service, eMBMS) system architecture 10 of existing 3rd generation (The 3rd Generation Partnership Project, 3GPP) includes a broadcast/multicast service center (Broadcast/Multicast Service Center, BM-SC) 101, a broadcast/multicast service gateway (Multimedia Broadcast/Multicast Service Gateway, MBMS GW) 102, a mobility management entity (Mobility Management Entity, MME) 103, a serving general packet radio service support node (Serving GPRS Supporting Node, SGSN) 104, a multi-cell/multicast coordination entity (Multi-cell/Multicast Coordination Entity, MCE) 105, an access network 106, and an application server (Application Server) 107. The BM-SC 101 is configured to provide an MBMS user service and manage transmission of the MBMS user service. The MBMS GW 102 is configured to forward signaling between the BM-SC 101 and the MME 103 or between the BM-SC 101 and the SGSN 104. The MME 103 or the SGSN 104 is configured to receive session control signaling of an MBMS bearer service, and transmit it to the access network 106, and to allocate a Multimedia Broadcast multicast service Single Frequency Network (Multimedia Broadcast multicast service Single Frequency Network, MBSFN) radio resource of the access network 106. The access network 106 includes an evolved universal terrestrial radio access network (Evolved Universal Terrestrial Radio Access Network, E-UTRAN) and an evolved universal terrestrial radio access network (Universal Terrestrial Radio Access Network, UTRAN). The access network 106 is configured to send MBMS service data to a specified MBMS service area. The application server 107 is configured to provide content of an MBMS service.

In the prior art, a configuration mechanism used by the eMBMS system architecture 10 includes: statically configuring, in the BM-SC 101, MBMS service area (Service Area, SA) configuration information corresponding to a broadcast area; statically configuring, in the MME 103, MCE configuration information corresponding to an MBMS SA; statically configuring, in the MCE 105, MBSFN Area configuration information corresponding to the MBMS SA; and statically configuring, in the access network 106, cell configuration information corresponding to the MBMS SA. A request of the application server 107 is a dynamic request, and configuration information such as an MBMS SA corresponding to a broadcast/multicast area requested by the application server 107 cannot be statically generated in advance in the system architecture 10. Therefore, in the existing system architecture 10, the broadcast area cannot be dynamically generated in an eMBMS broadcast mechanism.

### SUMMARY

In view of this, the present invention provides an evolved multimedia broadcast/multicast service processing network element and an evolved multimedia broadcast/multicast service broadcast method, so as to dynamically generate a broadcast area under an eMBMS capability open mechanism.

A first aspect provides an eMBMS processing network element, where the eMBMS processing network element includes a first transceiver and a first processor; the first transceiver receives an eMBMS bearer application request from an application server, and the eMBMS bearer application request includes a broadcast area; the first transceiver sends the broadcast area to a configuration service center, and receives broadcast/multicast service area MBMS SA configuration information that is returned by the configuration service center according to the broadcast area; the first processor establishes an eMBMS session resource of the broadcast area according to the MBMS SA configuration information.

With reference to an implementation manner of the first aspect, in a first possible implementation manner, the first transceiver receives the eMBMS bearer application request from the application server by using an open platform.

With reference to the implementation manner of the first aspect, in a second possible implementation manner, that the first processor establishes an eMBMS session resource of the broadcast area according to the MBMS SA configuration information includes: initiating, by the first processing unit, a session start procedure according to the MBMS SA configuration information, and establishing the eMBMS session resource of the broadcast area according to the session start procedure.

With reference to the implementation manner of the first aspect, in a third possible implementation manner, before the first transceiver receives the eMBMS bearer application request from the application server, the first transceiver further receives an eMBMS bearer capability query from the application server, where the eMBMS bearer capability query includes a broadcast area and quality of service QoS information of an eMBMS bearer; the first processor obtains multi-cell/multicast coordination entity MCE information according to the broadcast area; the first transceiver sends an eMBMS bearer capability query request to an MCE corresponding to the MCE information; and the first transceiver receives an eMBMS bearer capability query response from the MCE, where the response includes a result of determining, by the MCE, whether an access network can allocate QoS required by the eMBMS bearer.

With reference to the implementation manner of the first aspect, in a fourth possible implementation manner, the eMBMS bearer application request further includes QoS information of an eMBMS, and after the first transceiver receives the eMBMS bearer application request from the application server, the first processor obtains MCE information according to the broadcast area; the first transceiver sends an eMBMS bearer capability query request to an MCE corresponding to the MCE information; and the first transceiver obtains an eMBMS bearer capability query response from the MCE, where the eMBMS bearer capability query response includes a result of determining, by the MCE, whether an access network can allocate QoS required by an eMBMS bearer.

With reference to the third possible implementation manner or the fourth possible implementation manner of the first aspect, in a fifth possible implementation manner, that the first processor obtains MCE information according to the broadcast area includes: sending, by the first transceiver, an MCE query request to the configuration service center, so that the configuration service center generates an MCE query response according to the MCE query request; and obtaining, by the first transceiver, the MEC query response from the configuration service center, where the MCE query response includes the MCE information.

With reference to the third possible implementation manner or the fourth possible implementation manner of the first aspect, in a sixth possible implementation manner, if the eMBMS bearer capability query response includes a result that an eMBMS bearer capability requested by the application server cannot be allocated, the first transceiver sends eMBMS bearer application failure information to the application server.

With reference to the first aspect to the sixth possible implementation manner, in a seventh possible implementation manner, the configuration service center is a configuration server or an operations support system OSS.

A second aspect provides an eMBMS broadcast method, where the eMBMS broadcast method includes: receiving an eMBMS bearer application request from an application server, where the eMBMS bearer application request includes a broadcast area; sending the broadcast area to a configuration service center; receiving MBMS SA configuration information returned by the configuration service center according to the broadcast area; and establishing an eMBMS session resource of the broadcast area according to the MBMS SA configuration information.

With reference to an implementation manner of the second aspect, in a first possible implementation manner, the obtaining an eMBMS bearer application request from an application server includes: receiving the eMBMS bearer application request from the application server by using an open platform.

With reference to the implementation manner of the second aspect, in a second possible implementation manner, the establishing an eMBMS session resource of the broadcast area according to the MBMS SA configuration information includes: initiating a session start procedure according to the MBMS SA configuration information, and establishing the eMBMS session resource of the broadcast area according to the session start procedure.

With reference to the implementation manner of the second aspect, in a third possible implementation manner, before the receiving, by a first processing network element, an eMBMS bearer application request from an application server, the method further includes: receiving an eMBMS bearer capability query from the application server, where the eMBMS bearer capability query includes a broadcast area and QoS information of an eMBMS bearer; obtaining MCE information according to the broadcast area; sending an eMBMS bearer capability query request to an MCE corresponding to the MCE information; and receiving an eMBMS bearer capability query response returned by the MCE, where the response includes a result of determining, by the MCE, whether an access network can allocate QoS required by the eMBMS bearer.

With reference to the implementation manner of the second aspect, in a fourth possible implementation manner, the eMBMS bearer application request further includes QoS information of an eMBMS bearer, and after the receiving, by a first processing network element, an eMBMS bearer application request from an application server, the method further includes: obtaining MCE information according to the broadcast area; sending an eMBMS bearer capability query request to an MCE corresponding to the MCE information; and obtaining an eMBMS bearer capability query response from the MCE, where the eMBMS bearer capability query response includes a result of determining, by the MCE, whether an access network can allocate QoS required by the eMBMS bearer.

With reference to the third possible implementation manner or the fourth possible implementation manner of the second aspect, in a fifth possible implementation manner, the obtaining MCE information according to the broadcast area includes: sending an MCE query request to the configuration service center, so that the configuration service center generates an MCE query response according to the MCE query request; and obtaining the MEC query response from the configuration service center, where the MCE query response includes the MCE information.

With reference to the third possible implementation manner or the fourth possible implementation manner of the second aspect, in a sixth possible implementation manner, if the eMBMS bearer capability query response includes a result that an eMBMS bearer capability requested by the application server cannot be allocated, eMBMS bearer application failure information is sent to the application server.

With reference to the second aspect to the sixth possible implementation manner, in a seventh possible implementation manner, the configuration service center is a configuration server or an OSS.

A third aspect provides an eMBMS processing network element, where the eMBMS processing network element includes a second transceiver and a second processor; the second transceiver receives a broadcast area of an eMBMS bearer application request sent by a broadcast/multicast service center BM-SC; the second processor obtains MBMS SA configuration information according to the broadcast area; and the second transceiver sends the MBMS SA configuration information to the BM-SC, where the MBMS SA configuration information is used to establish an eMBMS session resource of the broadcast area.

With reference to an implementation manner of the third aspect, in a first possible implementation manner, that the second processor obtains MBMS SA configuration information according to the broadcast area includes: converting, by the second processor, the broadcast area into cell list information; and obtaining, by the second processor, the MBMS SA configuration information by querying an MBMS SA configuration information table according to the cell list information; or generating, by the second processor, the MBMS SA configuration information according to the cell list information.

With reference to the first possible implementation manner of the third aspect, in a second possible implementation manner, the obtaining, by the second processor, the MBMS SA configuration information by querying an MBMS SA configuration information table according to the cell list information includes: determining, by the second processor, whether there is the MBMS SA configuration information table corresponding to the cell list information, where the MBMS SA configuration information table includes the MBMS SA configuration information, and the MBMS SA configuration information includes SAI information and at least one type of the following information: control plane network element list information, an MCE list, an MBSFN Area identifier, or a cell list; where the control plane network element list information includes MME list information or SGSN list information; and if there is the MBMS SA configuration information table corresponding to the cell list information, obtaining, by the second processor, the MBMS SA configuration information from the MBMS SA configuration information table.

With reference to the first possible implementation manner of the third aspect, in a third possible implementation manner, the generating, by the second processor, the MBMS SA configuration information according to the cell list information includes: generating, by the second processor, SAI information; querying, by the second processor, a cell information table according to the cell list information, to obtain at least one type of the following information: corresponding control plane network element list information or corresponding MCE list information; generating, by the second processor, the MBMS SA configuration information table, where the MBMS SA configuration information table includes the MBMS SA configuration information, and the MBMS SA configuration information includes the generated SAI information and at least one type of the following information: the control plane network element list information obtained from the query, an MCE list, or a cell list; where the control plane network element list information includes MME list information or SGSN list information; and obtaining, by the second processor, the MBMS SA configuration information from the MBMS SA configuration information table.

With reference to the third possible implementation manner of the third aspect, in a fourth possible implementation manner, the second processor obtains MCE configuration information from the MBMS SA configuration information table, or generates the MCE configuration information according to the broadcast area, where the MCE configuration information includes the generated SAI information and the MCE list information; and the second transceiver sends the MCE configuration information to a control plane network element.

With reference to the third possible implementation manner or the fourth possible implementation manner of the third aspect, in a fifth possible implementation manner, the second processor obtains MBSFN Area configuration information from the MBMS SA configuration information table, or generates the MBSFN Area configuration information according to the broadcast area, where the MBSFN Area configuration information includes the SAI information, the MBSFN Area identifier, and the cell list; and the second transceiver sends the MBSFN Area configuration information to an MCE.

With reference to the third possible implementation manner or the fourth possible implementation manner or the fifth possible implementation manner of the third aspect, in a sixth possible implementation manner, the second processor obtains cell configuration information from the MBMS SA configuration information table, or generates the cell configuration information according to the broadcast area, where the cell configuration information includes a cell ID and the SAI information; and the second transceiver sends the cell configuration information to a base station.

With reference to the implementation manner of the third aspect, in a seventh possible implementation manner, before the second transceiver receives the broadcast area of the eMBMS bearer application request sent by the broadcast/multicast service center BM-SC, the second transceiver obtains an MCE query request from an open platform or the BM-SC, where the MCE query request includes a broadcast area; the second processor generates an MCE query response according to the broadcast area of the query request, where the MCE query response includes MCE information; and the second transceiver sends the MCE query response to the open platform or the BM-SC, so that the open platform or the BM-SC sends an eMBMS bearer capability query request to an MCE, and obtains an eMBMS bearer capability query response from the MCE, where the eMBMS bearer capability query response includes a result of determining, by the MCE, whether an access network can allocate QoS required by an eMBMS bearer.

With reference to the implementation manner of the third aspect, in an eighth possible implementation manner, after the second transceiver receives the broadcast area of the eMBMS bearer application request sent by the broadcast/multicast service center BM-SC, the second transceiver obtains an MCE query request from an open platform or the BM-SC, where the MCE query request includes the broadcast area; the second processor generates an MCE query response according to the broadcast area of the query request, where the MCE query response includes MCE information; and the second transceiver sends the MCE information to the open platform or the BM-SC, so that the open platform or the BM-SC sends an eMBMS bearer capability query request to an MCE, and obtains an eMBMS bearer capability query response from the MCE, where the eMBMS bearer capability query response includes a result of determining, by the MCE, whether an access network can allocate QoS required by an eMBMS bearer.

With reference to the third aspect to the seventh possible implementation manner, in a ninth possible implementation manner, the configuration service center is a configuration server or an OSS, and the control plane network element is a mobility management entity MME or a serving general packet radio service support node SGSN.

A fourth aspect provides an eMBMS broadcast method, where the eMBMS method includes: receiving a broadcast area of an eMBMS bearer application request sent by a BM-SC; obtaining MBMS SA configuration information according to the broadcast area; and sending the MBMS SA configuration information to the BM-SC, where the MBMS SA configuration information is used to establish an eMBMS session resource of the broadcast area.

With reference to an implementation manner of the fourth aspect, in a first possible implementation manner, the obtaining MBMS SA configuration information according to the broadcast area includes: converting the broadcast area into cell list information; and obtaining the MBMS SA configuration information by querying an MBMS SA configuration information table according to the cell list information; or generating the MBMS SA configuration information according to the cell list information.

With reference to the first possible implementation manner of the fourth aspect, in a second possible implementation manner, the obtaining the MBMS SA configuration information by querying an MBMS SA configuration information table according to the cell list information includes: determining whether there is an MBMS SA configuration information table corresponding to the cell list information, where the MBMS SA configuration information table includes the MBMS SA configuration information, and the MBMS SA configuration information includes SAI information and at least one type of the following information: control plane network element list information, an MCE list, an MBSFN Area identifier, or a cell list, where the control plane network element list information includes MME list information or SGSN list information; and if there is an MBMS SA configuration information table corresponding to the cell list information, obtaining the MBMS SA configuration information from the MBMS SA configuration information table.

With reference to the first possible implementation manner of the fourth aspect, in a third possible implementation manner, the generating the MBMS SA configuration information according to the cell list information includes: generating SAI information; querying a cell information table according to the cell list information, to obtain at least one type of the following information: corresponding control plane network element list information or corresponding MCE list information; generating an MBMS SA configuration information table, where the MBMS SA configuration information table includes the MBMS SA configuration information, the MBMS SA configuration information includes the generated SAI information and at least one type of the following information: the control plane network element list information obtained from the query, an MCE list, or a cell list, and the control plane network element list information includes MME list information or SGSN list information; and obtaining the MBMS SA configuration information from the MBMS SA configuration information table.

With reference to the third possible implementation manner of the fourth aspect, in a fourth possible implementation manner, the method further includes: obtaining MCE configuration information from the MBMS SA configuration information table, or generating the MCE configuration information according to the broadcast area, where the MCE configuration information includes the generated SAI information and the MCE list information; and sending the MCE configuration information to a control plane network element.

With reference to the third possible implementation manner or the fourth possible implementation manner of the fourth aspect, in a fifth possible implementation manner, the method further includes: obtaining MBSFN Area configuration information from the MBMS SA configuration information table, or generating the MBSFN Area configuration information according to the broadcast area, where the MBSFN Area configuration information includes the SAI information, the MBSFN Area identifier, and the cell list; and sending the MBSFN Area configuration information to an MCE.

With reference to the third possible implementation manner or the fourth possible implementation manner or the fifth possible implementation manner of the fourth aspect, in a sixth possible implementation manner, the method further includes: obtaining cell configuration information from the MBMS SA configuration information table, or generating the cell configuration information according to the broadcast area, where the cell configuration information includes a cell ID and the SAI information; and sending the cell configuration information to a base station.

With reference to the implementation manner of the fourth aspect, in a seventh possible implementation manner, before the broadcast area of the eMBMS bearer application request is obtained from the BM-SC, the method further includes: obtaining an MCE query request from an open platform or the BM-SC, where the MCE query request includes a broadcast area; generating an MCE query response according to the broadcast area of the query request, where the MCE query response includes MCE information; and sending the MCE query response to the open platform or the BM-SC, so that the open platform or the BM-SC sends an eMBMS bearer capability query request to an MCE, and obtains an eMBMS bearer capability query response from the MCE, where the eMBMS bearer capability query response includes a result of determining, by the MCE, whether an access network can allocate QoS required by an eMBMS bearer.

With reference to the implementation manner of the fourth aspect, in an eighth possible implementation manner, after the broadcast area of the eMBMS bearer application request is obtained from the BM-SC, the method further includes: obtaining an MCE query request from an open platform or the BM-SC, where the MCE query request includes the broadcast area; generating an MCE query response according to the broadcast area of the query request, where the MCE query response includes MCE information; and sending the MCE information to the open platform or the BM-SC, so that the open platform or the BM-SC sends an eMBMS bearer capability query request to an MCE, and obtains an eMBMS bearer capability query response from the MCE, where the eMBMS bearer capability query response includes a result of determining, by the MCE, whether an access network can allocate QoS required by an eMBMS bearer.

With reference to the fourth aspect to the eighth possible implementation manner, in a ninth possible implementation manner, the configuration service center is a configuration server or an OSS, and the control plane network element is an MME or an SGSN.

A fifth aspect provides a communications system, where the communications system includes a first eMBMS processing network element, a second eMBMS processing network element, and an application server, the first eMBMS processing network element is the eMBMS processing network element according to any one of the first aspect to the seventh possible implementation manner of the first aspect, and the second eMBMS processing network element is the eMBMS processing network element according to any one of the third aspect to the ninth possible implementation manner of the third aspect.

According to the foregoing solutions, a beneficial effect of the present invention is as follows: In the present invention, an eMBMS processing network element obtains MBMS SA configuration information from a configuration service center, and the eMBMS processing network element establishes an eMBMS session resource of a broadcast area according to the MBMS SA configuration information. This can resolve a problem that a broadcast area cannot be dynamically generated under an eMBMS capability open mechanism.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an evolved multimedia broadcast/multicast service system architecture in the prior art;
FIG. 2 is a schematic structural diagram of a communications system according to a first embodiment of the present invention;
FIG. 3 is a schematic structural diagram of a communications system according to a second embodiment of the present invention;
FIG. 4 is a flowchart of an eMBMS broadcast method according to a first embodiment of the present invention;
FIG. 5 is a flowchart of an eMBMS broadcast method according to a second embodiment of the present invention;
FIG. 6 is a flowchart of an eMBMS broadcast method according to a third embodiment of the present invention;
FIG. 7 is a flowchart of an eMBMS broadcast method according to a fourth embodiment of the present invention; and
FIG. 8 is a flowchart of an eMBMS broadcast method according to a fifth embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Referring to FIG. 2, FIG. 2 is a structural diagram of a communications system according to a first embodiment of the present invention. A communications system 20 disclosed in this embodiment includes a first eMBMS processing network element 201, a second eMBMS processing network element 202, and an application server 203.

In this embodiment, the first eMBMS processing network element 201 includes a first processor 211, a first transceiver 221, and a first memory 231. The second eMBMS processing network element 202 includes a second processor 212, a second transceiver 222, and a second memory 232. The second memory 232 is configured to store a broadcast/multicast service area MBMS SA (Service Area, service area) configuration information table. The first transceiver 221 obtains an eMBMS bearer application request from the application server 203. The first memory 231 is further configured to store the eMBMS bearer application request. The eMBMS bearer application request includes a broadcast area. The broadcast area is preferably cell (cell) information, latitude and longitude information, geographical location information, or shopping mall location information. The first transceiver 221 sends the broadcast area of the eMBMS bearer application request to the second transceiver 222. The second processor 212 obtains the broadcast area from the second transceiver 222, and queries the MBMS SA configuration information table according to the broadcast area, to obtain MBMS SA configuration information. The second transceiver 222 sends the MBMS SA configuration information to the first transceiver 221. The MBMS SA configuration information includes a SAI (Service Area ID, service area identifier) and control plane network element list information in the MBMS SA configuration information table. The control plane network element list information includes MME list information or SGSN list information. The first processor 211 obtains the MBMS SA configuration information from the first transceiver 221, and establishes an eMBMS session resource of the broadcast area according to the MBMS SA configuration information, that is, the MBMS SA configuration information is used to establish the eMBMS session resource of the broadcast area.

That the first processor 211 establishes an eMBMS session resource of the broadcast area according to the MBMS SA configuration information includes: initiating, by the first processing unit 211, a session start procedure according to the MBMS SA configuration information, where the session start procedure initiated by the first processing unit 211 includes SAI information and the control plane network element list information in the MBMB SA configuration information; and establishing the eMBMS session resource of the broadcast area according to the session start procedure.

In this embodiment, the second memory 232 stores a cell information table. The cell information table includes cell ID information, corresponding MCE information, and corresponding control plane network element list information. That the second processor 212 obtains MBMS SA configuration information according to the broadcast area specifically includes the following. The second memory 232 stores an address location information table. The address location information table includes cell ID information and latitude and longitude information, geographical location information, or shopping mall location information that is corresponding to the cell ID information. The second processor 212 queries the address location information table according to latitude and longitude information, geographical location information, or shopping mall location information of the broadcast area, to obtain cell list information corresponding to the broadcast area. In this way, the second processor 212 converts the broadcast area into the cell list information. The cell list information includes information about one or more cell IDs. The MBMS SA configuration information table includes an SAI and cell list information corresponding to the SAI. The second processor 212 queries the MBMS SA configuration information table according to the cell list information, to determine whether there is an MBMS SA configuration information table corresponding to the cell list information. If there is an MBMS SA configuration information table corresponding to the cell list information, that is, the second processor 212 can obtain, by means of query, an MBMS SA configuration information table according to the cell list information, the MBMS SA configuration information table is corresponding to the cell list information. The MBMS SA configuration information table includes SAI information and at least one type of the following information: control plane network element list information, an MCE list, an MBSFN Area identifier, or a cell list. The second processor 212 obtains the MBMS SA configuration information from the MBMS SA configuration information table. If there is no MBMS SA configuration information table corresponding to the cell list information, that is, the second processor 212 cannot obtain, by means of query, an MBMS SA configuration information table according to the cell list information, the second processor 212 queries the cell information table according to the cell list information, to obtain at least one type of the following information: control plane network element information or MCE list information that is corresponding to the cell list information. The second processor 212 dynamically generates an MBMS SA configuration information table. The MBMS SA configuration information table includes the generated SAI information and at least one type of the following information: the control plane network element list information obtained from the query, an MCE list, or a cell list. The second processor 212 obtains the MBMS SA configuration information from the MBMS SA configuration information table. The MME list information includes information about one or more MME IP addresses or MME identifiers, the SGSN list information includes information about one or more SGSN IP addresses or SGSN identifiers, and the MCE list information includes information about one or more MCE IP addresses or MCE identifiers.

After the first processor 211 obtains the MBMS SA configuration information from the first transceiver 221, the first processor 211 configures, according to the MBMS SA configuration information, a first MBMS SA information table to be stored in the first memory 231. The first MBMS SA information table includes an SAI, control plane network element list information (MME list information or SGSN list information).

Preferably, the first eMBMS processing network element 201 is preferably a BM-SC, the second eMBMS processing network element 202 is preferably a configuration service center. The configuration service center is a configuration server or an operations support system (Operations Support System, OSS).

In the communications system 20 disclosed in this embodiment, a second processor 212 obtains MBMS SA configuration information according to a broadcast area; a first processor 211 obtains the MBMS SA configuration information by using a first transceiver 221, and establishes an eMBMS session resource of the broadcast area according to the MBMS SA configuration information. This can resolve a problem that a broadcast area cannot be dynamically generated under an eMBMS broadcast mechanism. In addition, a mobile network operator can open an eMBMS broadcast capability to a third party, so as to implement monetization processing of an eMBMS value-added service, and increase revenue of the mobile network operator.

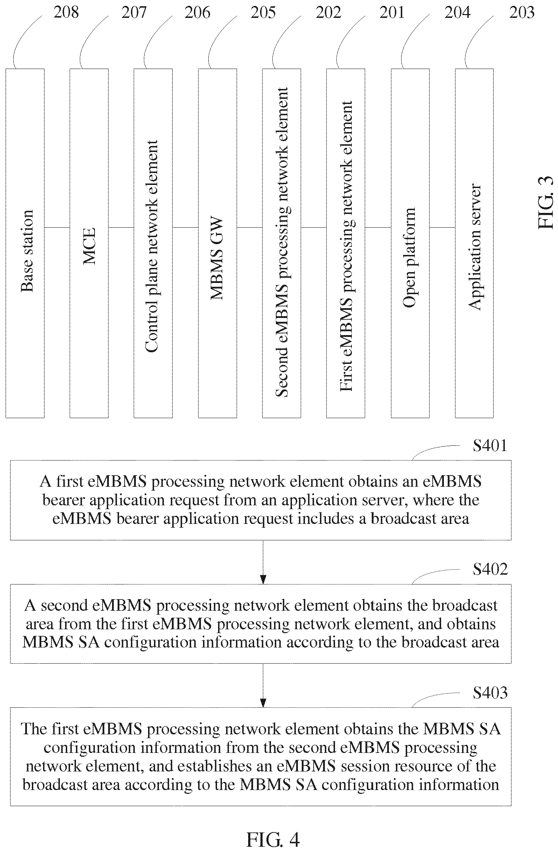

The present invention further provides a communications system in a second embodiment. The communications system is described on the basis of the communications system 20 disclosed in the first embodiment. As shown in FIG. 3, the communications system disclosed in this embodiment further includes an open platform 204, an MBMS GW 205, a control plane network element 206, an MCE 207, and a base station 208.

In this embodiment, a first transceiver 221 obtains an eMBMS bearer application request from the application server 203 by using the open platform 204. Before the first transceiver 221 obtains the eMBMS bearer application request from the application server 203 by using the open platform 204, the following are included. The open platform 204 obtains an eMBMS bearer capability query from the application server 203. The eMBMS bearer capability query includes a broadcast area and quality of service QoS information of an eMBMS bearer, that is, quality of service information required by the eMBMS bearer applied for in the request of the application server 203. The open platform 204 sends an MCE query request to the second eMBMS processing network element 202. The MCE query request includes the broadcast area. The second processor 212 generates an MCE query response according to the broadcast area included in the MCE query request, where the MCE query response includes MCE information. That is, the second processor 212 queries the MCE information that is stored in the second memory 232 and that is corresponding to the broadcast area. The MCE information is preferably MCE IP address information or MCE identifier information. The open platform 204 obtains the MCE query response from the second transceiver 222, and sends an eMBMS bearer capability query request to the MCE 207 corresponding to the MCE information. The eMBMS bearer capability query request includes the quality of service QoS information of the eMBMS bearer. The MCE 207 generates an eMBMS bearer capability query response according to the eMBMS bearer capability query request. The eMBMS bearer capability query response includes a result of determining, by the MCE 207, whether an access network can allocate QoS required by the eMBMS bearer. If the access network cannot allocate the QoS required by the eMBMS bearer, the eMBMS bearer capability query response includes failure information. If the access network can allocate the QoS required by the eMBMS bearer, the eMBMS bearer capability query response includes success information. The open platform 204 obtains the eMBMS bearer capability query response from the MCE 207, and sends the eMBMS bearer capability query response to the application server 203. If the eMBMS bearer capability query response includes the success information, the application server 203 sends the eMBMS bearer application request to the first eMBMS processing network element 201 by using the open platform 204. If the eMBMS bearer capability query response includes the failure information, the process ends, and the application server does not send the eMBMS bearer application request.

After the second transceiver 222 sends the MBMS SA configuration information to the first transceiver 221, the second processor 212 obtains MCE configuration information, and the second transceiver 222 sends the MCE configuration information to the control plane network element 206. The MCE configuration information includes service area identifier SAI information and MCE list information. A manner of obtaining the MCE configuration information by the second processor 212 is as follows: The second processor 212 obtains the MCE configuration information from the MBMS SA configuration information table, or the second processor 212 generates the MCE configuration information according to the broadcast area. After receiving the MCE configuration information, the control plane network element 206 generates an MCE information table. The MCE information table includes the SAI information and the MCE list information.

Alternatively, the second processor 212 obtains MBSFN Area configuration information. The second transceiver 222 sends the MBSFN Area configuration information to the MCE 207. The MBSFN Area configuration information includes SAI information, an MBSFN Area ID (identifier), and a cell list. A manner of obtaining the MBSFN Area configuration information by the second processor 212 is as follows: The second processor 212 obtains the MBSFN Area configuration information from the MBMS SA configuration information table, or the second processor 212 generates the MBSFN Area configuration information according to the broadcast area. After receiving the MBSFN Area configuration information, the MCE 207 generates an MBSFN Area information table. The MBSFN Area information table includes SAI information, an MBSFN Area ID, and cell list information. The MBSFN Area ID information may be generated by the MCE 207 itself instead of the second eMBMS processing network element 202. In this case, the MBSFN Area configuration information sent by the second transceiver 222 to the MCE 207 includes only the SAI information and the cell list information. After receiving the MBSFN Area configuration information, the MCE 207 generates the MBSFN Area ID according to the SAI information, and generates the MBSFN Area information table.

Alternatively, the second processor 212 obtains cell configuration information. The second transceiver 222 sends the cell configuration information to the base station 208. The cell configuration information includes a cell ID and SAI information. A manner of obtaining the cell configuration information by the second processor 212 is as follows: The second processor 212 obtains the cell configuration information from the MBMS SA configuration information table, or the second processor 212 generates the cell configuration information according to the broadcast area. After receiving the cell configuration information, the base station 208 generates a cell broadcast information table. The cell broadcast information table includes the cell ID and the SAI information.

Preferably, the control plane network element 206 is a mobility management entity MME or a serving general packet radio service support node SGSN.

The present invention further provides a communications system in a third embodiment. A difference between the communications system disclosed in this embodiment and the communications system disclosed in the second embodiment is as follows. Before the first transceiver 221 obtains an eMBMS bearer application request from the application server 203, or before the first transceiver 221 obtains the eMBMS bearer application request from the application server 203 by using the open platform 204, the first transceiver 221 obtains an eMBMS bearer capability query from the application server 203, or the first transceiver 221 obtains the eMBMS bearer capability query from the application server 203 by using the open platform 204. The eMBMS bearer capability query includes a broadcast area and quality of service QoS information of an eMBMS bearer. The first processor 211 obtains MCE information according to the broadcast area of the eMBMS bearer capability query. That is, the first transceiver 221 sends an MCE query request to the second eMBMS processing network element 202, where the MCE query request includes the broadcast area, and obtains an MCE query response from the second eMBMS processing network element 202; and the first processor 211 obtains the MCE information from the MCE query response according to the broadcast area. The first transceiver 221 sends an eMBMS bearer capability query request to the MCE 207 corresponding to the MCE information, where the eMBMS bearer capability query request includes the quality of service QoS information of the eMBMS bearer, and obtains an eMBMS bearer capability query response from the MCE 207, where the response includes a result of determining, by the MCE 207, whether the access network can allocate QoS required by the eMBMS bearer. If the access network cannot allocate the QoS required by the eMBMS bearer, the eMBMS bearer capability query response includes failure information. If the access network can allocate the QoS required by the eMBMS bearer, the eMBMS bearer capability query response includes success information. The first transceiver 221 sends the eMBMS bearer capability query response to the application server 203, or the first transceiver 221 sends the eMBMS bearer capability query response to the application server 203 by using the open platform 204. If the eMBMS bearer capability query response includes the success information, the application server 203 sends the eMBMS bearer application request to the first eMBMS processing network element 201 by using the open platform 204; or if the eMBMS bearer capability query response includes the failure information, the flow ends, and the application server 203 does not send the eMBMS bearer application request.

The present invention further provides a communications system in a fourth embodiment. A difference between the communications system disclosed in this embodiment and the communications system disclosed in the second embodiment is as follows. The open platform 204 obtains an eMBMS bearer application request from the application server 203, and generates an MCE query request according to a broadcast area of the eMBMS bearer application request. The MCE query request includes the broadcast area included in the eMBMS bearer application request. The open platform 204 sends the MCE query request to the second eMBMS processing network element 202. The MCE query request includes the broadcast area. The second processor 212 generates an MCE query response according to the broadcast area included in the MCE query request, where the MCE query response includes MCE information. That is, the second processor 212 queries the MCE information that is stored in the second memory 232 and that is corresponding to the broadcast area. The MCE information is preferably MCE IP address information or MCE identifier information. The open platform 204 obtains the MCE query response from the second transceiver 222, where the query response includes the MCE information corresponding to the broadcast area, and sends the eMBMS bearer capability query request to the MCE 207 corresponding to the MCE information. The eMBMS bearer capability query request includes quality of service QoS information of an eMBMS bearer. The MCE 207 generates an eMBMS bearer capability query response according to the eMBMS bearer capability query request. The query response includes a result of determining, by the MCE 207, whether the access network can allocate QoS required by the eMBMS bearer. The open platform 204 obtains the eMBMS bearer capability query response from the MCE 207. If the eMBMS bearer capability query response includes success information, the open platform 204 sends the eMBMS bearer application request to the first eMBMS processing network element 201. If the eMBMS bearer capability query response includes failure information, the open platform 204 sends eMBMS bearer application failure information to the application server 203, and the flow processing ends.

The present invention further provides a communications system in a fifth embodiment. A difference between the communications system disclosed in this embodiment and the communications system disclosed in the second embodiment is as follows. After the first transceiver 221 obtains an eMBMS bearer application request from the application server 203, or after the first transceiver 221 obtains the eMBMS bearer application request from the application server 203 by using the open platform 204, the following are included. The first processor 211 obtains MCE information according to a broadcast area. That is, the first processor 211 generates an MCE query request according to a broadcast area included in the eMBMS bearer application request, where the MCE query request includes the broadcast area included in the eMBMS bearer application request, and sends the MCE query request to the second eMBMS processing network element 202 by using the first transceiver 221. The MCE query request includes the broadcast area, so that the second processor 212 generates an MCE query response according to the broadcast area included in the MCE query request, where the MCE query response includes the MCE information, that is, the second processor 212 queries the MCE information that is stored in the second memory 232 and that is corresponding to the broadcast area. The MCE information is preferably MCE IP address information or MCE identifier information. The first transceiver 221 obtains the MCE query response from the second transceiver 222. The first processor 211 obtains the MCE information according to the MCE query response. The first transceiver 221 sends an eMBMS bearer capability query request to the MCE 207 corresponding to the MCE information. The eMBMS bearer capability query request includes quality of service QoS information of an eMBMS bearer. The MCE 207 generates an eMBMS bearer capability query response according to the eMBMS bearer capability query request. The first transceiver 221 obtains the eMBMS bearer capability query response from the MCE 207. The eMBMS bearer capability query response includes a result of determining, by the MCE 207, whether the access network can allocate QoS required by the eMBMS bearer. If the eMBMS bearer capability query response includes success information, the first transceiver 221 sends the broadcast area to the second eMBMS processing network element 202. If the eMBMS bearer capability query response includes failure information, the first transceiver 221 sends eMBMS bearer application failure information to the application server 203, or the first transceiver 221 sends the eMBMS bearer application failure information to the application server 203 by using the open platform 204, and the flow processing ends.

The present invention further provides an eMBMS broadcast method in the first embodiment. The eMBMS broadcast method is described on the basis of the communications system 20 disclosed in the first embodiment. As shown in FIG. 4, the eMBMS broadcast method disclosed in this embodiment includes the following steps.
S401. The first eMBMS processing network element 201 obtains an eMBMS bearer application request from the application server 203, where the eMBMS bearer application request includes a broadcast area.
S402. The second eMBMS processing network element 202 obtains the broadcast area from the first eMBMS processing network element 201, and obtains MBMS SA configuration information according to the broadcast area.
S403. The first eMBMS processing network element 201 obtains the MBMS SA configuration information from the second eMBMS processing network element 202, and establishes an eMBMS session resource of the broadcast area according to the MBMS SA configuration information.

In S401, the broadcast area is preferably cell information, latitude and longitude information, geographic location information, or shopping mall location information.

In S402, the second eMBMS processing network element 202 stores a cell information table. The cell information table includes cell ID information, corresponding MCE information, and corresponding control plane network element list information, and the control plane network element list information includes MME information or SGSN information. That the second eMBMS processing network element 202 obtains MBMS SA configuration information table according to the broadcast area specifically includes the following. The second eMBMS processing network element 202 configures an address location information table. The address location information table includes cell ID information and latitude and longitude information, geographical location information, or shopping mall location information that is corresponding to the cell ID information. The second eMBMS processing network element 202 queries the address location information table according to latitude and longitude information, geographical location information, or shopping mall location information of the broadcast area, to obtain cell list information corresponding to the broadcast area. In this way, the second eMBMS processing network element 202 converts the broadcast area into the cell list information. The cell list information includes information about one or more cell IDs. The second eMBMS processing network element 202 configures an MBMS SA configuration information table. The MBMS SA configuration information table includes an SAI and cell list information corresponding to the SAI. The second eMBMS processing network element 202 queries the MBMS SA configuration information table according to the cell list information, to determine whether there is an MBMS SA configuration information table corresponding to the cell list information. If there is an MBMS SA configuration information table corresponding to the cell list information, that is, the second eMBMS processing network element 202 obtains, by means of query, an MBMS SA configuration information table, the MBMS SA configuration information table is corresponding to the cell list information. The MBMS SA configuration information table includes SAI information and at least one type of the following information: control plane network element list information, an MCE list, an MBSFN Area identifier, or a cell list. If there is no MBMS SA configuration information table corresponding to the cell list information, that is, the second eMBMS processing network element 202 cannot obtain, by means of query, an MBMS SA configuration information table, the second eMBMS processing network element 202 queries the cell information table according to the cell list information, to obtain at least one type of the following information: control plane network element information or MCE list information that is corresponding to the cell list information. The second eMBMS processing network element 202 dynamically generates an MBMS SA configuration information table. The MBMS SA configuration information table includes the generated SAI information and at least one type of the following information: the control plane network element list information obtained from the query, an MCE list, or a cell list. The second eMBMS processing network element 202 obtains the MBMS SA configuration information from the MBMS SA configuration information table. The MME list information includes information about one or more MME IP addresses or MME identifiers, the SGSN list information includes information about one or more SGSN IP addresses or SGSN identifiers, and the MCE list information includes information about one or more MCE IP addresses or MCE identifiers.

In S403, after the first eMBMS processing network element 201 obtains the MBMS SA configuration information (the MBMS SA configuration information includes the SAI and the control plane network element list information of the MBMS SA configuration information table), the first eMBMS processing network element 201 generates a first MBMS SA information table according to the MBMS SA configuration information. The first MBMS SA information table includes the SAI and the control plane network element list information. The first eMBMS processing network element 201 initiates a session start procedure according to the MBMS SA configuration information, and establishes an eMBMS session resource of the broadcast area according to the session start procedure.

Preferably, the first eMBMS processing network element 201 is preferably a BM-SC, the second eMBMS processing network element 202 is preferably a configuration service center. The configuration service center is a configuration server or an OSS.

The eMBMS broadcast method disclosed in this embodiment can resolve a problem that a broadcast area cannot be dynamically generated under an eMBMS broadcast mechanism. In addition, a mobile network operator can open an eMBMS broadcast capability to a third party, so as to implement monetization processing of an eMBMS value-added service, and increase revenue of the mobile network operator.

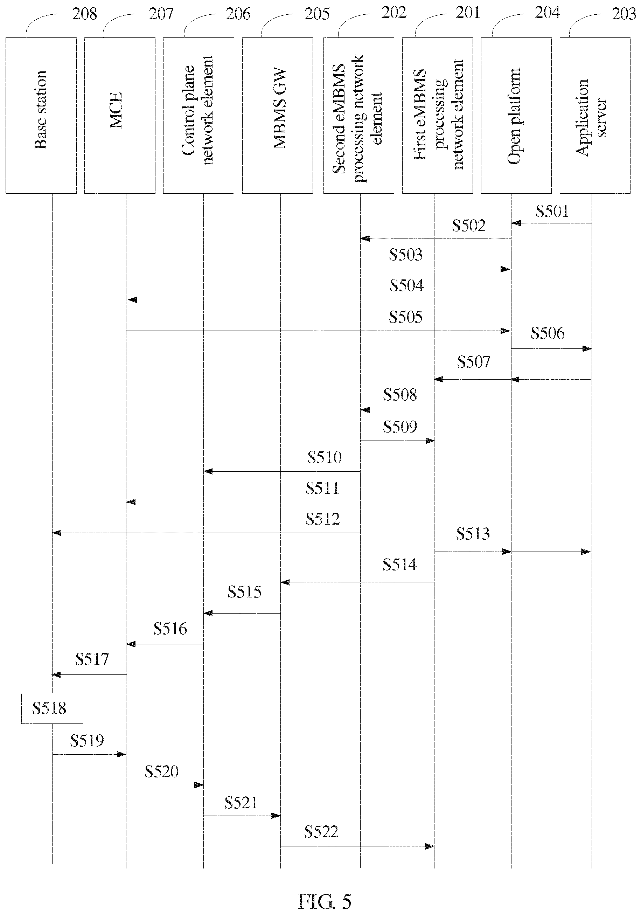

The present invention further provides an eMBMS broadcast method in the second embodiment. The eMBMS broadcast method is described on the basis of the communications system disclosed in the second embodiment. As shown in FIG. 5, the eMBMS broadcast method disclosed in this embodiment includes the following steps.
S501. The open platform 204 obtains an eMBMS bearer capability query from the application server 203, where the eMBMS bearer capability query includes a broadcast area and quality of service QoS information of an eMBMS bearer.
S502. The open platform 204 sends an MCE query request to the second eMBMS processing network element 202, where the MCE query request includes the broadcast area included in the received eMBMS bearer capability query.
S503. The second eMBMS processing network element 202 generates an MCE query response according to the broadcast area included in the MCE query request, and sends the MCE query response to the open platform 204, where the MCE query response includes MCE information. The MCE information is preferably MCE IP address information or MCE identifier information. The second eMBMS processing network element 202 configures an MCE information table. The MCE information table includes MCE information and a broadcast area corresponding to the MCE information. The second eMBMS processing network element 202 queries the MCE information table according to the broadcast area included in the MCE query request, to obtain the MCE information, and generates the MCE query response according to the broadcast area.
S504. The open platform 204 sends an eMBMS bearer capability query request to the MCE 207 corresponding to the MCE information, where the eMBMS bearer capability query request includes the quality of service QoS of the eMBMS bearer.
S505. The MCE 207 generates an eMBMS bearer capability query response according to the eMBMS bearer capability query request, and sends the eMBMS bearer capability query response to the open platform 204. The eMBMS bearer capability query response includes a result of determining, by the MCE 207, whether the access network can allocate QoS required by the eMBMS bearer. If the access network cannot allocate the QoS required by the eMBMS bearer, the eMBMS bearer capability query response includes failure information; if the access network can allocate the QoS required by the eMBMS bearer, the eMBMS bearer capability query response includes success information.
S506. The open platform 204 sends the eMBMS bearer capability query response to the application server 203.
S507. If the eMBMS bearer capability query response includes the success information, the application server 203 sends an eMBMS bearer application request to the first eMBMS processing network element 201 by using the open platform 204, where the eMBMS bearer application request carries the broadcast area.
S508. The second eMBMS processing network element 202 obtains the broadcast area from the first eMBMS processing network element 201, and obtains MBMS SA configuration information according to the broadcast area. For detailed processing, refer to the foregoing detailed description of S402 in FIG. 4. Details are not described herein.
S509. The first eMBMS processing network element 201 obtains the MBMS SA configuration information (the MBMS SA configuration information includes an SAI and control plane network element list information) from the second eMBMS processing network element 202. The first eMBMS processing network element 201 dynamically configures a first MBMS SA configuration information table according to the MBMS SA configuration information (the first MBMS SA configuration information table includes the SAI and the control plane network element list information). The first eMBMS processing network element 201 establishes an eMBMS session resource of the broadcast area according to the MBMS SA configuration information.
S510. The second eMBMS processing network element 202 obtains MCE configuration information (the MCE configuration information includes SAI information and MCE list information), and sends the MCE configuration information to the control plane network element 206.
   Subsequently, after receiving MCE configuration information, the control plane network element 206 generates an MCE information table. The MCE information table includes the SAI information and the MCE list information.
S511. The second eMBMS processing network element 202 obtains MBSFN Area configuration information (the MBSF Area configuration information includes SAI information, an MBSFN Area ID, and cell list information), and sends the MBSFN Area configuration information to the MCE 207.
   Subsequently, after receiving the MBSFN Area configuration information, the MCE 207 generates an MBSFN Area information table. The MBSFN Area information table includes the SAI information, the MBSFN Area ID, and the cell list information. The MBSFN Area ID may be generated by the MCE 207 itself. In this case, the MBSFN Area configuration information obtained by the second eMBMS processing network element 202 includes only the SAI information and the cell list information.
S512. The second eMBMS processing network element 202 obtains cell configuration information, and sends the cell configuration information to the base station 208.
   Subsequently, after receiving the cell configuration information, the base station 208 generates a cell broadcast information table. The cell broadcast information table includes a cell ID and SAI information.
   It should be noted that there is no sequential relationship among step 509 to step 512.
S513. The first eMBMS processing network element 201 sends an eMBMS bearer application response to the open platform 204, and the open platform 204 forwards the eMBMS bearer application response to the application server 203.
S514. The first eMBMS processing network element 201 allocates a TMGI of a point-to-multipoint type to the eMBMS bearer requested by the application server 203, and sends a session request to the MBMS GW 205, where the session request includes the TMGI information, the SAI information, and the control plane network element list information. The first eMBMS processing network element 201 obtains the control plane network element list information from the first MBMS SA configuration information table.
S515. The MBMS GW 205 allocates one IP multicast address according to the session request, and sends the session request to the control plane network element 206, where the session request includes the IP multicast address information and the SAI information. The MBMS GW 205 obtains the control plane network element list information from the session request, and sends the session request to the control plane network element 206 corresponding to the control plane network element list information.
S516. The control plane network element 206 queries the MCE information table according to the session request, and sends the session request to the MCE 207, where the session request includes the SAI information. The control plane network element 206 obtains the SAI information from the session request, and queries an MCE information table according to the SAI information, to obtain MCE list information from the MCE information table. The control plane network element 206 sends the session request to the MCE 207 corresponding to the MCE list information.
S517. The MCE 207 sends the session request to the base station 208, where the session request includes the SAI information. The MCE 207 obtains the SAI information from the session request, and queries an MBSFN Area information table according to the SAI information, to obtain the cell list information from the MBSFN Area information table. The MCE 207 sends the session request to the base station 208 corresponding to the cell list information.
S518. The base station 208 establishes a broadcast resource for an eMBMS session, and joins a broadcast group according to the IP multicast address. The base station 208 obtains the SAI information from the session request, and queries a cell broadcast information table according to the SAI information, to obtain cell ID information from the cell broadcast information table. The base station establishes the broadcast resource for the eMBMS session in a cell corresponding to the cell ID.
S519. The base station 208 sends a session response to the MCE 207.
S520. The MCE 207 sends the session response to the control plane network element 206.
S521. The control plane network element 206 sends the session response to the MBMS GW 205.
S522. The MBMS GW 205 sends the session response to the first eMBMS processing network element 201.

In S506, if the eMBMS bearer capability query response includes the success information, S507 is performed; if the eMBMS bearer capability query response includes the failure information, subsequent flow processing ends.

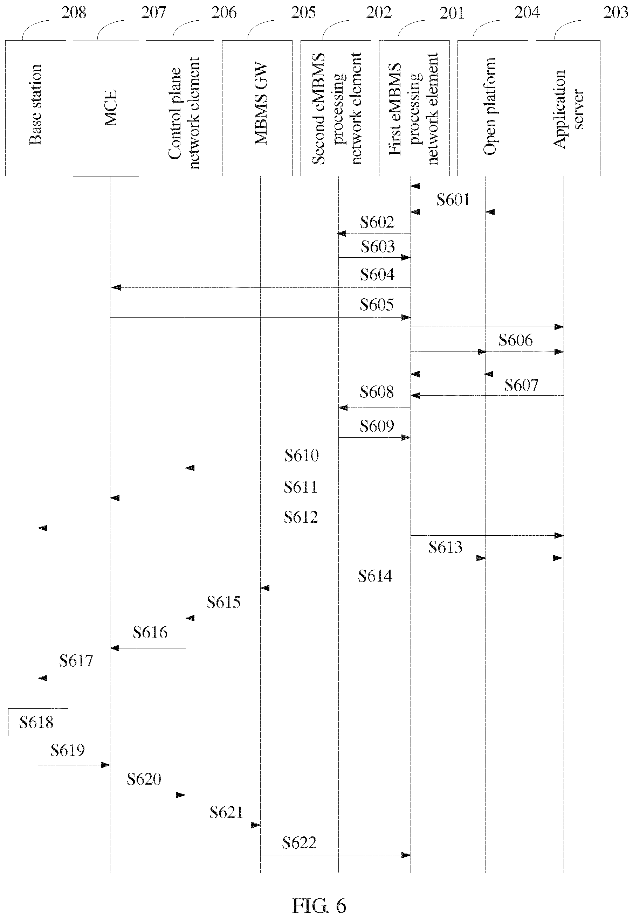

The present invention further provides an eMBMS broadcast method in the third embodiment. The eMBMS broadcast method is described on the basis of the communications system disclosed in the third embodiment. As shown in FIG. 6, a method for opening an eMBMS capability disclosed in this embodiment includes the following steps.
S601. The first eMBMS processing network element 201 obtains an eMBMS bearer capability query from the application server 203, or the first eMBMS processing network element 201 obtains the eMBMS bearer capability query from the application server 203 by using the open platform 204, where the eMBMS bearer capability query includes a broadcast area and quality of service QoS information of an eMBMS bearer.
S602. The first eMBMS processing network element 201 sends an MCE query request to the second eMBMS processing network element 202, where the MCE query request includes the broadcast area included in the eMBMS bearer capability query.
S603. The second eMBMS processing network element 202 generates an MCE query response according to the MCE query request, and sends the MCE query response to the first eMBMS processing network element 201, where the MCE query response includes MCE information.
S604. The first eMBMS processing network element 201 sends an eMBMS bearer capability query request to the MCE 207 corresponding to the MCE information, where the eMBMS bearer capability query request includes QoS required by the eMBMS bearer.
S605. The MCE 207 generates an eMBMS bearer capability query response according to the eMBMS bearer capability query request, and sends the eMBMS bearer capability query response to the first eMBMS processing network element 201, where the eMBMS bearer capability query response includes a result of determining, by the MCE 207, whether the access network can allocate the QoS required by the eMBMS bearer. If the access network cannot allocate the QoS required by the eMBMS bearer, the eMBMS bearer capability query response includes failure information; if the access network can allocate the QoS required by the eMBMS bearer, the eMBMS bearer capability query response includes success information.
S606. The first eMBMS processing network element 201 sends the eMBMS bearer capability query response to the application server 203, or the first eMBMS processing network element 201 sends the eMBMS bearer capability query response to the application server 203 by using the open platform 204.
S607. If the eMBMS bearer capability query response includes the success information, the first eMBMS processing network element 201 obtains an eMBMS bearer application request from the application server 203, or the first eMBMS processing network element 201 obtains the eMBMS bearer application request from the application server 203 by using the open platform 204.
S608 to S612 are the same as S508 to S512.
S613. The first eMBMS processing network element 201 sends an eMBMS bearer application response to the application server 203, or the first eMBMS processing network element 201 sends the eMBMS bearer application response to the application server 203 by using the open platform 204.
S614 to S622 are the same as S514 to S522.

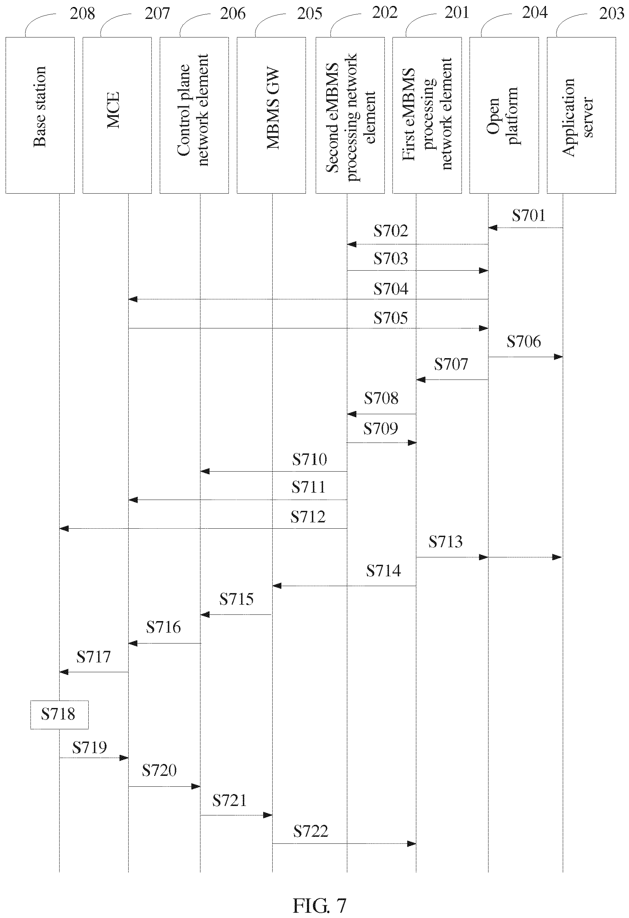

The present invention further provides an eMBMS broadcast method in the fourth embodiment. The eMBMS broadcast method is described on the basis of the communications system disclosed in the fourth embodiment. As shown in FIG. 7, the eMBMS broadcast method disclosed in this embodiment includes the following steps.
S701. The open platform 204 obtains an eMBMS bearer application request from the application server 203, where the eMBMS bearer application request includes a broadcast area and quality of service QoS information of an eMBMS bearer.
S702 to S705 are the same as S502 to S505.
S706. If the eMBMS bearer capability query response includes the failure information, the open platform 204 sends eMBMS bearer application failure information to the application server 203, and the flow ends.
S707. If the eMBMS bearer capability query response includes the success information, the first eMBMS processing network element 201 obtains an eMBMS bearer application request from the open platform 204.
S708 to S722 are the same as S508 to S522.

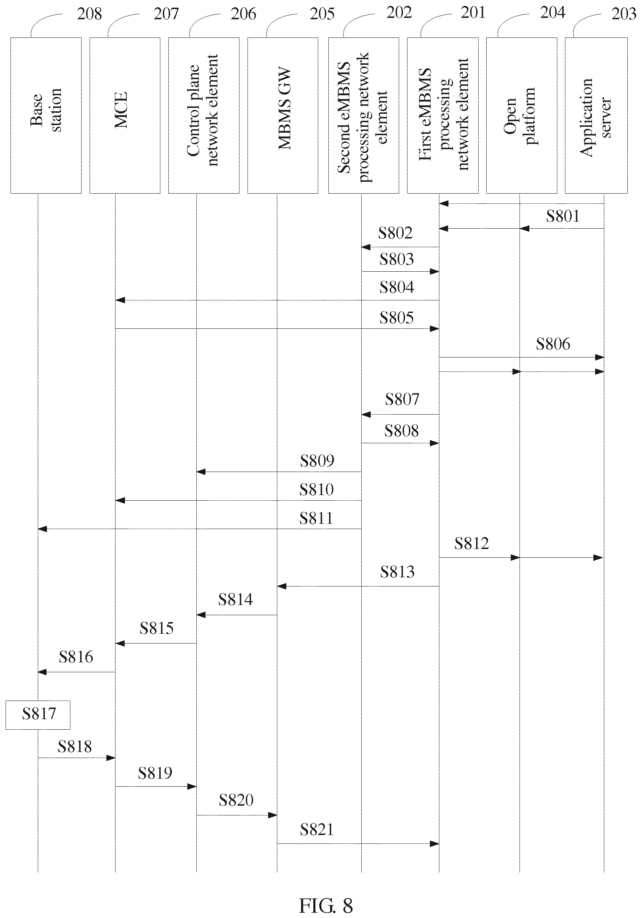

The present invention further provides an eMBMS broadcast method in the fifth embodiment. The eMBMS broadcast method is described on the basis of the communications system disclosed in the fifth embodiment. As shown in FIG. 8, the eMBMS broadcast method disclosed in this embodiment includes the following steps.
S801. The first eMBMS processing network element 201 obtains an eMBMS bearer application request from the application server 203, or the first eMBMS processing network element 201 obtains the eMBMS bearer application request from the application server 203 by using the open platform 204, where the eMBMS bearer application request includes a broadcast area and quality of service QoS information of an eMBMS bearer.
S802. The first eMBMS processing network element 201 sends an MCE query request to the second eMBMS processing network element 202, where the MCE query request includes the broadcast area included in the eMBMS bearer application request.
S803. The second eMBMS processing network element 202 generates an MCE query response according to the MCE query request, and sends the MCE query response to the first eMBMS processing network element 201, where the MCE query response includes MCE information.
S804. The first eMBMS processing network element 201 sends an eMBMS bearer capability query request to the MCE 207 corresponding to the MCE information, where the eMBMS bearer capability query request includes QoS required by the eMBMS bearer.
S805. The MCE 207 generates an eMBMS bearer capability query response according to the eMBMS bearer capability query request, and sends the eMBMS bearer capability query response to the first eMBMS processing network element 201, where the eMBMS bearer capability query response includes a result of determining, by the MCE 207, whether the access network can allocate the QoS required by the eMBMS bearer. If the access network cannot allocate the QoS required by the eMBMS bearer, the eMBMS bearer capability query response includes failure information; if the access network can allocate the QoS required by the eMBMS bearer, the eMBMS bearer capability query response includes success information.
S806. If the eMBMS bearer capability query response includes the failure information, the first eMBMS processing network element 201 sends eMBMS bearer application failure information to the application server 203, or the first eMBMS processing network element 201 sends the eMBMS bearer application failure information to the application server 203 by using the open platform 204, and the subsequent flow processing ends.
S807. If the eMBMS bearer capability query response includes the success information, the first eMBMS processing network element 201 sends the broadcast area to the second eMBMS processing network element 202.
S808 to S821 are the same as S509 to S522.

Different from a case in the prior art, in the present invention, a first transceiver obtains MBMS SA configuration information from a configuration service center, and a first processor establishes an eMBMS session resource of a broadcast area according to the MBMS SA configuration information. This can resolve a problem that a broadcast area cannot be dynamically generated under an eMBMS broadcast mechanism. In addition, a mobile network operator can open an eMBMS broadcast capability to a third party, so as to implement monetization processing of an eMBMS value-added service, and increase revenue of the mobile network operator.

It may be learned from the foregoing descriptions of the implementation manners that, a person skilled in the art may clearly understand that some or all steps of the methods in the embodiments may be implemented by software in addition to a necessary universal hardware platform. Based on such an understanding, the technical solutions of the present invention essentially or the part contributing to the prior art may be implemented in a form of a software product. The software product may be stored in a storage medium, such as a ROM/RAM, a magnetic disk, or an optical disc, and includes several instructions for instructing a computer device (which may be a personal computer, a server, or a network communication device such as media gateway) to perform the methods described in the embodiments or some parts of the embodiments of the present invention.

It should be noted that the embodiments in this specification are all described in a progressive manner, for same or similar parts in the embodiments, reference may be made to these embodiments, and each embodiment focuses on a difference from other embodiments. Especially, device and system embodiments are basically similar to a method embodiment, and therefore are described briefly; for related parts, reference may be made to partial descriptions in the method embodiment. The described device and system embodiments are merely examples. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. A person of ordinary skill in the art may understand and implement the embodiments of the present invention without creative efforts.

The foregoing descriptions are merely preferred implementation manners of the present invention, but are not intended to limit the protection scope of the present invention. It should be noted that a person of ordinary skill in the art may make certain improvements and polishing without departing from the principle of the present application and the improvements and polishing shall fall within the protection scope of the present application.

## Claims

1. An evolved multimedia broadcast/multicast service eMBMS processing network element, wherein the eMBMS processing network element comprises a first transceiver and a first processor; wherein
the first transceiver receives an eMBMS bearer application request from an application server, wherein the eMBMS bearer application request comprises a broadcast area;
the first transceiver sends the broadcast area to a configuration service center, and receives broadcast/multicast service area MBMS SA configuration information that is returned by the configuration service center according to the broadcast area; and
the first processor establishes an eMBMS session resource of the broadcast area according to the MBMS SA configuration information.

2. The processing network element according to claim 1, wherein the first transceiver receives the eMBMS bearer application request from the application server by using an open platform.

3. The processing network element according to claim 1, wherein that the first processor establishes an eMBMS session resource of the broadcast area according to the MBMS SA configuration information comprises:
initiating, by the first processing unit, a session start procedure according to the MBMS SA configuration information, and establishing the eMBMS session resource of the broadcast area according to the session start procedure.

4. The processing network element according to claim 1, wherein before the first transceiver receives the eMBMS bearer application request from the application server,
the first transceiver further receives an eMBMS bearer capability query from the application server, wherein the eMBMS bearer capability query comprises a broadcast area and quality of service QoS information of an eMBMS bearer;
the first processor obtains multi-cell/multicast coordination entity MCE information according to the broadcast area;
the first transceiver sends an eMBMS bearer capability query request to an MCE corresponding to the MCE information; and
the first transceiver receives an eMBMS bearer capability query response from the MCE, wherein the response comprises a result of determining, by the MCE, whether an access network can allocate QoS required by the eMBMS bearer.

5. The processing network element according to claim 1, wherein the eMBMS bearer application request further comprises QoS information of an eMBMS, and after the first transceiver receives the eMBMS bearer application request from the application server,
the first processor obtains MCE information according to the broadcast area;
the first transceiver sends an eMBMS bearer capability query request to an MCE corresponding to the MCE information; and
the first transceiver obtains the eMBMS bearer capability query response from the MCE, wherein the eMBMS bearer capability query response comprises a result of determining, by the MCE, whether an access network can allocate QoS required by an eMBMS bearer.

6. The processing network element according to either claim 4 or 5, wherein that the first processor obtains MCE information according to the broadcast area comprises:
sending, by the first transceiver, an MCE query request to the configuration service center, so that the configuration service center generates an MCE query response according to the MCE query request; and
obtaining, by the first transceiver, the MEC query response from the configuration service center, wherein the MCE query response comprises the MCE information.

7. The processing network element according to either claim 4 or 5, wherein if the eMBMS bearer capability query response comprises a result that an eMBMS bearer capability requested by the application server cannot be allocated, the first transceiver sends eMBMS bearer application failure information to the application server.

8. The processing network element according to any one of claims 1 to 7, wherein the configuration service center is a configuration server or an operations support system OSS.

9. An eMBMS broadcast method, wherein the method comprises:
receiving, by a first processing network element, an eMBMS bearer application request from an application server, wherein the eMBMS bearer application request comprises a broadcast area;
sending the broadcast area to a configuration service center;
receiving MBMS SA configuration information returned by the configuration service center according to the broadcast area; and
establishing an eMBMS session resource of the broadcast area according to the MBMS SA configuration information.

10. The method according to claim 9, wherein the obtaining an eMBMS bearer application request from an application server comprises:
receiving the eMBMS bearer application request from the application server by using an open platform.

11. The method according to claim 9, wherein the establishing an eMBMS session resource of the broadcast area according to the MBMS SA configuration information comprises:
initiating a session start procedure according to the MBMS SA configuration information, and establishing the eMBMS session resource of the broadcast area according to the session start procedure.

12. The method according to claim 9, wherein before the receiving, by a first processing network element, an eMBMS bearer application request from an application server, the method further comprises:
receiving an eMBMS bearer capability query from the application server, wherein the eMBMS bearer capability query comprises a broadcast area and quality of service QoS information of an eMBMS bearer;
obtaining MCE information according to the broadcast area;
sending an eMBMS bearer capability query request to an MCE corresponding to the MCE information; and
receiving an eMBMS bearer capability query response returned by the MCE, wherein the response comprises a result of determining, by the MCE, whether an access network can allocate quality of service QoS of the eMBMS bearer.

13. The method according to claim 9, wherein the eMBMS bearer application request further comprises quality of service QoS information of an eMBMS bearer, and after the receiving, by a first processing network element, an eMBMS bearer application request from an application server, the method further comprises:
obtaining MCE information according to the broadcast area;
sending an eMBMS bearer capability query request to an MCE corresponding to the MCE information; and
obtaining an eMBMS bearer capability query response from the MCE, wherein the eMBMS bearer capability query response comprises a result of determining, by the MCE, whether an access network can allocate quality of service QoS of the eMBMS bearer.

14. The method according to either claim 12 or 13, wherein the obtaining MCE information according to the broadcast area comprises:
sending an MCE query request to the configuration service center, so that the configuration service center generates an MCE query response according to the MCE query request; and
obtaining the MEC query response from the configuration service center, wherein the MCE query response comprises the MCE information.

15. The method according to either claim 12 or 13, wherein if the eMBMS bearer capability query response comprises a result that an eMBMS bearer capability requested by the application server cannot be allocated, eMBMS bearer application failure information is sent to the application server.

16. The method according to any one of claims 10 to 15, wherein the configuration service center is a configuration server or an OSS.

17. An eMBMS processing network element, wherein the eMBMS processing network element comprises a second transceiver and a second processor; wherein
the second transceiver receives a broadcast area of an eMBMS bearer application request sent by a broadcast/multicast service center BM-SC;
the second processor obtains MBMS SA configuration information according to the broadcast area; and
the second transceiver sends the MBMS SA configuration information to the BM-SC, wherein the MBMS SA configuration information is used to establish an eMBMS session resource of the broadcast area.

18. The processing network element according to claim 17, wherein that the second processor obtains MBMS SA configuration information according to the broadcast area comprises:
converting, by the second processor, the broadcast area into cell list information; and
obtaining, by the second processor, the MBMS SA configuration information by querying an MBMS SA configuration information table according to the cell list information; or generating, by the second processor, the MBMS SA configuration information according to the cell list information.

19. The processing network element according to claim 18, wherein the obtaining, by the second processor, the MBMS SA configuration information by querying an MBMS SA configuration information table according to the cell list information comprises:
determining, by the second processor, whether there is the MBMS SA configuration information table corresponding to the cell list information, wherein the MBMS SA configuration information table comprises the MBMS SA configuration information, and the MBMS SA configuration information comprises SAI information and at least one type of the following information: control plane network element list information, an MCE list, an MBSFN Area identifier, or a cell list; wherein the control plane network element list information comprises MME list information or SGSN list information; and
if there is the MBMS SA configuration information table corresponding to the cell list information, obtaining, by the second processor, the MBMS SA configuration information from the MBMS SA configuration information table.

20. The processing network element according to claim 18, wherein the generating, by the second processor, the MBMS SA configuration information according to the cell list information comprises:
generating, by the second processor, SAI information;
querying, by the second processor, a cell information table according to the cell list information, to obtain at least one type of the following information: corresponding control plane network element list information or corresponding MCE list information;
generating, by the second processor, the MBMS SA configuration information table, wherein the MBMS SA configuration information table comprises the MBMS SA configuration information, and the MBMS SA configuration information comprises the generated SAI information and at least one type of the following information: the control plane network element list information obtained from the query, an MCE list, or a cell list; wherein the control plane network element list information comprises MME list information or SGSN list information; and
obtaining, by the second processor, the MBMS SA configuration information from the MBMS SA configuration information table.

21. The processing network element according to claim 20, wherein the second processor obtains MCE configuration information from the MBMS SA configuration information table, or generates the MCE configuration information according to the broadcast area, wherein the MCE configuration information comprises the generated SAI information and the MCE list information; and the second transceiver sends the MCE configuration information to a control plane network element.

22. The processing network element according to claim 20 or 21, wherein the second processor obtains MBSFN Area configuration information from the MBMS SA configuration information table, or generates the MBSFN Area configuration information according to the broadcast area, wherein the MBSFN Area configuration information comprises the SAI information, the MBSFN Area identifier, and the cell list; and the second transceiver sends the MBSFN Area configuration information to an MCE.

23. The processing network element according to any one of claims 20 to 22, wherein the second processor obtains cell configuration information from the MBMS SA configuration information table, or generates the cell configuration information according to the broadcast area, wherein the cell configuration information comprises a cell ID and the SAI information; and the second transceiver sends the cell configuration information to a base station.

24. The processing network element according to claim 17, wherein before the second transceiver receives the broadcast area of the eMBMS bearer application request sent by the broadcast/multicast service center BM-SC,
the second transceiver obtains an MCE query request from an open platform or the BM-SC, wherein the MCE query request comprises a broadcast area;
the second processor generates an MCE query response according to the broadcast area of the query request, wherein the MCE query response comprises MCE information; and
the second transceiver sends the MCE query response to the open platform or the BM-SC, so that the open platform or the BM-SC sends an eMBMS bearer capability query request to the MCE, and obtains an eMBMS bearer capability query response from the MCE, wherein the eMBMS bearer capability query response comprises a result of determining, by the MCE, whether an access network can allocate QoS required by an eMBMS bearer.

25. The processing network element according to claim 17, wherein after the second transceiver receives the broadcast area of the eMBMS bearer application request sent by the broadcast/multicast service center BM-SC,
the second transceiver obtains an MCE query request from an open platform or the BM-SC, wherein the MCE query request comprises the broadcast area;
the second processor generates an MCE query response according to the broadcast area of the query request, wherein the MCE query response comprises MCE information; and
the second transceiver sends the MCE information to the open platform or the BM-SC, so that the open platform or the BM-SC sends an eMBMS bearer capability query request to the MCE, and obtains an eMBMS bearer capability query response from the MCE, wherein the eMBMS bearer capability query response comprises a result of determining, by the MCE, whether an access network can allocate QoS required by an eMBMS bearer.

26. The processing network element according to any one of claims 17 to 25, wherein the configuration service center is a configuration server or an OSS, and the control plane network element is a mobility management entity MME or a serving general packet radio service support node SGSN.

27. An eMBMS broadcast method, wherein the method comprises:
receiving a broadcast area of an eMBMS bearer application request sent by a BM-SC;
obtaining MBMS SA configuration information according to the broadcast area; and
sending the MBMS SA configuration information to the BM-SC, wherein the MBMS SA configuration information is used to establish an eMBMS session resource of the broadcast area.

28. The method according to claim 27, wherein the obtaining MBMS SA configuration information according to the broadcast area comprises:
converting the broadcast area into cell list information; and
obtaining the MBMS SA configuration information by querying an MBMS SA configuration information table according to the cell list information; or generating the MBMS SA configuration information according to the cell list information.

29. The method according to claim 28, wherein the obtaining the MBMS SA configuration information by querying an MBMS SA configuration information table according to the cell list information comprises:
determining whether there is the MBMS SA configuration information table corresponding to the cell list information; and
if there is the MBMS SA configuration information table corresponding to the cell list information, determining that the MBMS SA configuration information table is corresponding to the cell list information, wherein the MBMS SA configuration information table comprises the MBMS SA configuration information, the MBMS SA configuration information comprises SAI information and at least one type of the following information: control plane network element list information, an MCE list, an MBSFN Area identifier, or a cell list, and the control plane network element list information comprises MME list information or SGSN list information; and obtaining the MBMS SA configuration information from the MBMS SA configuration information table.

30. The method according to claim 28, wherein the generating the MBMS SA configuration information according to the cell list information comprises:
generating SAI information;
querying a cell information table according to the cell list information, to obtain at least one type of the following information: corresponding control plane network element list information or MCE list information; and
generating an MBMS SA configuration information table, wherein the MBMS SA configuration information table comprises the generated SAI information and at least one type of the following information: the control plane network element list information obtained from the query, an MCE list, or a cell list; and obtaining the MBMS SA configuration information from the MBMS SA configuration information table, wherein the control plane network element list information comprises MME list information or SGSN list information.

31. The method according to claim 30, wherein the method further comprises:
obtaining MCE configuration information from the MBMS SA configuration information table, or generating the MCE configuration information according to the broadcast area, wherein the MCE configuration information comprises the SAI information and the MCE list information; and
sending the MCE configuration information to a control plane network element.

32. The method according to claim 30 or 31, wherein the method further comprises:
obtaining MBSFN Area configuration information from the MBMS SA configuration information table, or generating the MBSFN Area configuration information according to the broadcast area, wherein the MBSFN Area configuration information comprises the SAI information, the MBSFN Area identifier, and the cell list; and
sending the MBSFN Area configuration information to an MCE.

33. The method according to any one of claims 30 to 32, wherein the method further comprises:
obtaining cell configuration information from the MBMS SA configuration information table, or generating the cell configuration information according to the broadcast area, wherein the cell configuration information comprises a cell ID and the SAI information; and
sending the cell configuration information to a base station.

34. The method according to claim 27, wherein before the broadcast area of the eMBMS bearer application request is obtained from the BM-SC, the method further comprises:
obtaining an MCE query request from an open platform or the BM-SC, wherein the MCE query request comprises a broadcast area;
generating an MCE query response according to the broadcast area of the query request, wherein the MCE query response comprises MCE information; and
sending the MCE query response to the open platform or the BM-SC, so that the open platform or the BM-SC sends an eMBMS bearer capability query request to the MCE, and obtains an eMBMS bearer capability query response from the MCE, wherein the eMBMS bearer capability query response comprises a result of determining, by the MCE, whether an access network can allocate QoS required by an eMBMS bearer.

35. The method according to claim 27, wherein after the broadcast area of the eMBMS bearer application request is obtained from the BM-SC, the method further comprises:
obtaining an MCE query request from an open platform or the BM-SC, wherein the MCE query request comprises the broadcast area;
generating an MCE query response according to the broadcast area of the query request, wherein the MCE query response comprises MCE information; and
sending the MCE information to the open platform or the BM-SC, so that the open platform or the BM-SC sends an eMBMS bearer capability query request to the MCE, and obtains an eMBMS bearer capability query response from the MCE, wherein the eMBMS bearer capability query response comprises a result of determining, by the MCE, whether an access network can allocate QoS required by an eMBMS bearer.

36. The method according to any one of claims 27 to 35, wherein the configuration service center is a configuration server or an OSS, and the control plane network element is an MME or an SGSN.

37. A communications system, wherein the communications system comprises a first eMBMS processing network element, a second eMBMS processing network element, and an application server, wherein the first eMBMS processing network element is the eMBMS processing network element according to any one of claims 1 to 8, and the second eMBMS processing network element is the eMBMS processing network element according to any one of claims 17 to 26.
